Europäisches Patentamt

European Patent Office

Office européen des brevets

(11) Veröffentlichungsnummer : **0 008 747**
**B1**

(12) # EUROPÄISCHE PATENTSCHRIFT

(45) Veröffentlichungstag der Patentschrift :
02.12.81

(51) Int. Cl.³ : **B 60 S 5/04, F 16 K 11/22**

(21) Anmeldenummer : **79103094.3**

(22) Anmeldetag : **23.08.79**

(54) **Steuerorgan für ein Reifenfüllgerät.**

(30) Priorität : **12.09.78 DE 2839539**

(43) Veröffentlichungstag der Anmeldung :
**19.03.80 (Patentblatt 80/06)**

(45) Bekanntmachung des Hinweises auf die Patenterteilung : **02.12.81 Patentblatt 81/48**

(84) Benannte Vertragsstaaten :
**AT DE FR IT SE**

(56) Entgegenhaltungen :
**DE - C - 945 213**
**DE - U - 1 920 926**

(73) Patentinhaber : **MAHLE GMBH**
**Patentabteilung Pragstrasse 26-46**
**D-7000 Stuttgart 50 (DE)**

(72) Erfinder : **Luptovits, Theodor**
**Mittenfeldstrasse 58**
**D-7000 Stuttgart 31 (DE)**

Imprimerie Jouve, 17, rue du Louvre, 75001 Paris, France

## Steuerorgan für ein Reifenfüllgerät

Die Erfindung betrifft ein Steuerorgan für ein Reifenfüllgerät nach dem Oberbegriff des Anspruchs 1.

Bei auf dem Markt befindlichen Reifenfüllgeräten ist ein Steuerorgan der eingangs genannten Gattung bekannt. Bei jenem Steuerorgan werden Ein- und Auslaßventil über ein und den gleichen Bedienungsknopf vom Benutzer betätigt. Der Bedienungsknopf ist fest mit dem den Ventilteller des Einlaßventils durch unmittelbare Anlage betätigenden Ventilstößel verbunden. Durch Verschieben des Bedienungsknopfes in Richtung der gemeinsamen Ventilachse auf das Einlaßventil zu öffnet sich das Auslaßventil und läßt Luft aus dem Reifen über den Zentralraum des Steuerorgans austreten. Bei Verschieben des Bedienungsknopfes über ein bestimmtes Maß hinaus legt sich der Ventilteller des Auslaßventils an den Ventilstößel des Einlaßventils an und öffnet dieses, wobei das Auslaßventil gleichzeitig verschlossen wird. Durchdas geöffnete Einlaßventil kann sodann Druckluft aus dem Druckluftbehälter über den Zentralraum des Steuerorgans in den Reifen strömen. Bei geöffnetem Einlaßventil sorgt der Ventilteller des Auslaßventils durch seine Stellung in diesem Zustand dafür, daß die Verbindung zwischen Manometer und Zentralraum unterbrochen ist. Zur Beendigung des Füllvorganges entlastet man den Bedienungsknopf, der sodann durch Federkraft in seine Ausgangsstellung geht, bei der Ein- und Auslaßventil geschlossen und eine Verbindung zwischen Manometer und Reifen über den Zentralraum hergestellt ist.

Der Nachteil dieses Steuerorgans besteht im wesentlichen darin, daß eine Betätigung des Einlaßventils nur durch Überfahren des geöffneten Auslaßventiles möglich ist. Ebenso muß auch bei Beendigung des Füllvorganges wiederum das Auslaßventil kurzzeitig geöffnet werden. Dies führt zu unerwünschten Ungenauigkeiten beim Füllen des Reifens. Außerdem bedarf es zur richtigen Bedienung dieses Steuerorganes einer umfangreichen Anweisung an den Benutzer. Denn Benutzer sind in erster Linie die Fahrer von Kraftfahrzeugen, denen in der Regel der technische Aufbau des Reifenfüllgerätes mit seinem Steuergerät vollkommen unbekannt ist.

In bezug auf diesen Benutzerkreis ist es wichtig, eine Bedienungseinrichtung für das Reifenfüllgerät zur Verfügung zu haben, die eine falsche oder unsichere Bedienung von vornherein mit Sicherheit vermeidet. In der Regel ist eine solche Bedienungssicherheit nur dann gegeben, wenn für den Ein- und Auslaßvorgang getrennte Bedienungsknöpfe zur Verfügung stehen und in bezug auf ihre Funktion eindeutig markiert sind, z.B. durch den Aufdruck eines Plus für den Bedienungsknopf zum Füllen und ein Minus für den bedienungsknopf zum Luftablassen.

Bei der bekannten beschriebenen Ausführung des Steuerorgans mit Einknopfbedienung kann es leicht vorkommen, daß der Benutzer Luft ablassen möchte, aber den Bedienungsknopf zu stark eindrückt mit der Folge, daß nicht Luft aus dem Reifen abgelassen, sondern diesem noch zusätzlich zugeführt wird.

Hier Abhilfe zu schaffen, ist die Aufgabe der vorliegenden Erfindung. Dabei soll das Steuerorgan in gleicher Weise auch bei Benutzung durch technische Laien funktionssicher und konstruktiv einfach aufgebaut sein, um preiswert herstellbar zu sein.

Gelöst wird diese Aufgabe im Grundsatz bereits durch einen Aufbau des Steuerorgans nach dem kennzeichnenden Merkmal des Anspruchs 1.

Zweckmäßige Ausgestaltungen der Erfindung geben die Unteransprüche wieder.

Anhand eines in der Zeichnung dargestellten Ausführungsbeispieles wird die Erfindung nachfolgend noch näher erläutert.

Es zeigen

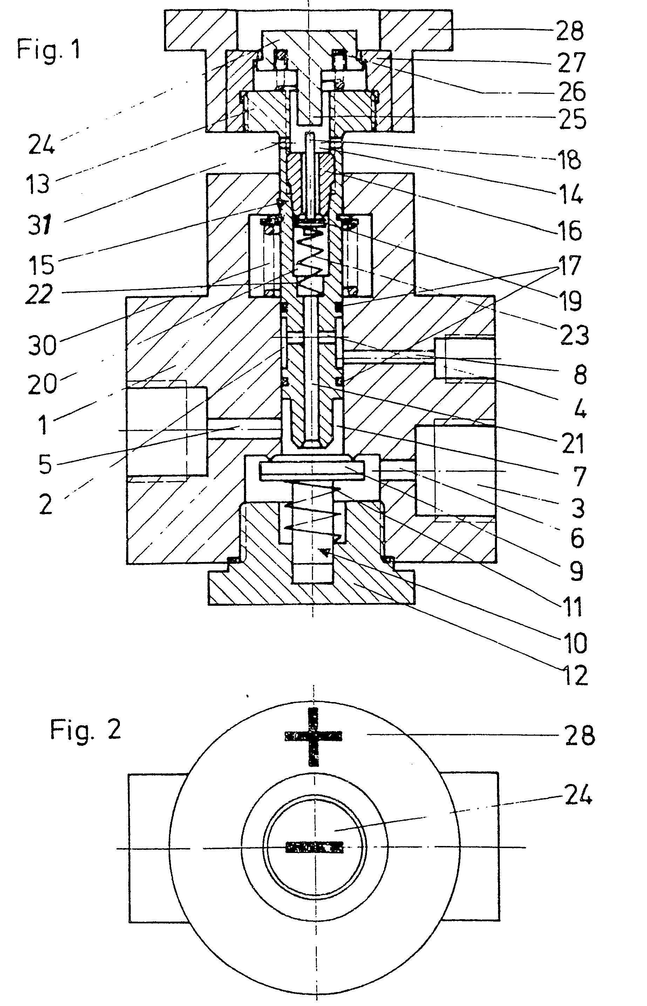

Fig. 1 ein erfindungsgemäßes Steuerorgan im Schnitt

Fig. 2 eine Draufsicht des Steuerorgans.

Ein Steuergehäuse 1 des Steuerorgans für ein Reifenfüllgerät beinhaltet eine Anschlußleitung 5 für einen Reifen, eine Anschlußleitung 3, 6 für einen Druckluftbehälter und eine Anschlußleitung 8 für ein Manometer zur Anzeige des Reifendrucks. Untereinander sind die Anschlußleitungen 5 ; 3, 6 ; 8 über Bohrungen 7, 21, 4 und einen Ringraum 2 miteinander verbunden. Die Bohrung 7 wird an ihrem einen Ende von einem Ventilteller 9 des Einlaßventils 10 zum Zuführen von Druckluft verschlossen, wodurch eine Trennung zwischen der Anschlußleitung 5 des Reifens und der Anschlußleitung 3, 6 des Druckluftbehälters erreicht wird. Das Einlaßventil 10 wird unter Zwischenschaltung einer Druckfeder 11 von einer Verschlußschraube 12 in seiner Lage gehalten.

In der Bohrung 7 gleitet axial verschiebbar ein mit einer Längs-Bohrung 21 versehener Ventil-Stößel 13. An die Längs-Bohrung 21 schließt sich an einem Ende im Inneren 14 des Stößels das Auslaßventil 15 zum Ablassen von Druckluft an. das Auslaßventil 15 mit einem Ventilsitz 16 trennt über einen Ventilteller 19 den Raum 14 von einem Raum 20 im Inneren des Ventil-Stößels 13, der über die Bohrung 21 mit der Bohrung 7 des Steuergehäuses 1 in Verbindung steht. Zwischen dem Ventilteller 19 und einer Verengung 22 des Raumes 20 des Ventil-Stößerls 13 ist eine Druckfeder 23 vorgesehen, die den Ventilteller 20 gegen den Ventilsitz 16 preßt.

Ein Ablaßknopf 24 ragt mit seinem einen Ende 25 in das Innere 14 des Ventil-Stößels 13 und stützt sich über eine Druckfeder 26 am Ventil-Stößel 13 ab. Die Vorspannung der Druckfeder 26 wird durch eine Hülse 27 erreicht, die an den Ventil-Stößel 13 angeschraubt wird und mit einem Bund den Ablaßknopf 34 umfaßt. Konzentrisch zum Ablaßknopf 24 liegt ein Füllknopf 28, der gegenüber dem Ventil-Stößel 13 durch die Hülse 27 in seiner Lage fixiert wird. Im Inneren des Steuergehäuses befindet sich ein sogenannter Zentralraum, der gebildet wird aus den Elementen 2, 4, 7, 20, 21 und bei unbetätigtem Einlaß 10 — und Auslaß 15 — Ventil in Verbindung steht mit diesen beiden Ventilen einerseits und den Anschlußleitungen 5 und 8 für den Reifen bzw. das Manometer andererseits.

Um die Handhabung des Steuerorgans zu erleichtern und um zu gewährleisten, daß nur der gewünschte Vorgang — nämlich Druckluft zuführen oder Druckluft ablassen-ausgeführt wird, ist die mit — gekennzeichnete Stirnseite des Ablaßknopfes 24 in axialer Richtung gesehen tiefer gelegen als die mit + gekennzeichnete Stirnfläche des Füllknopfes 28.

Die Funktion des erfindungsgemäßen Steuerorgans ist folgendermaßen :

Das Steuerorgan ist ständig mit einem nicht näher dargestellten Manometer über die Anschlußleitung 8 und einem ebenfalls nicht näher dargestellten Druckluftbehälter über die Anschlußleitung 3, 6 des Steuergehäuses verbunden. Nach Verbinden eines nicht näher dargestellten Reifens mit dem Steuergehäuse 1 über die Anschlußleitung 5 füllt die Druckluft des Reifens die Bohrungen 7, 21, 4, den Raum 20, den Ringraum 2 und die Anschlußleitung 8, sodaß an dem die Anschlußleitung 8 verschließenden nicht dargestellten Manometer der Reifendruck abgelesen werden kann.

Soll nun aufgrund des abgelesenen zu niedrigen Reifendruckes Luft nachgefüllt werden, so ist der Füllknopf 28 zu betätigen. Drückt man den Füllknopf 28 nach unten, so verschiebt sich aufgrund der starren Verbindung von Füllknopf 28 und Ventil-Stößel 13 über die Hülse 27 der Ventil-Stößel 13 entgegen der Wirkung einer Druckfeder 30 ebenfalls nach unten und sperrt einerseits die Bohrung 21 durch Auflage auf den Ventilteller 9 und damit die Verbindung zum Manometer. Durch den Druck des Ventil-Stößels 13 auf den Ventilteller 9 wird andererseits das Einlaßventil 10 geöffnet, wodurch eine Verbindung zwischen Reifen und Druckluftbehälter aufgesteuert und Luft in den Reifen nachgefüllt wird. Wird der Füllknopf 28 losgelassen, so drückt die Druckfeder 30 den Ventil-Stößel 13 wieder in seine Ausgangsposition zurück, wobei das Einlaßventil 10 die Verbindung zwischen Reifen und Druckluftbehälter versperrt und gleichzeitig die Verbindung zwischen Reifen und Manometer wieder aufgesteuert wird. Bei diesem Füllvorgang behält das Auslaßventil 15 seine Lage relativ zum Ventil-Stößel 13 bei und bleibt somit wirkungslos.

Zeigt bei einem über die Anschlußleitung 5 mit dem Steuergehäuse 1 verbundenen Reifen das Manometer einen höheren als den gewünschten Druck im Reifen an, so muß, um Druckluft aus dem Reifen zu entnehmen, der Ablaßknopf 24 betätigt werden. Wird der Ablaßknopf 24 nach unten gedrückt, so drückt das Ende 25 des Ablaßknopfes 24 auf den Ventil-Stößel 18 des Auslaßventils 15 und bewegt den Ventil-Stößel 18 nach unten. Bei dieser Abwärtsbewegung wird der Ventilteller 19 von dem Ventilsitz 16 abgehoben, sodaß die im Raum 20, der über die Bohrung 21 und die Anschlußleitung 5 mit dem Reifen verbunden ist, anstehende Druckluft durch das Auslaßventil 15 hindurch in den Hohlraum 14 strömt und über die Auslaßbohrung 31 ins Freie gelangt. Der Ablaßvorgang wird nach Loslassen des Ablaßknopfes 24 dadurch beendet, daß die Druckfeder 23 den Ventilteller 19 nach oben bewegt und gegen seinen Ventilsitz 16 preßt. Bei diesem Ablaßvorgang behält der ventil-Stößel 13 seine Ruhelage bei, sodaß das Einlaßventil 10 zum Zuführen von Druckluft wirkungslos bleibt. Durch die Dichtringe 17 wird der Zentralraum 2, 4, 7, 20, 21 bei aufgesteuerter Verbindung zwischen Reifen und Manometer gegenüber der Gleitfläche des Ventil-Stößels 13 in der Bohrung 11 gedichtet und andererseits bei unterbrochener Verbindung zwischen Manometer unf Reifen der Raum 21, 4, 2, 8 gegenüber dem unter dem Druck des Druckbehälters stehenden Zentralraumes 7, 5 und Atmosphäre gedichtet.

## Ansprüche

1. Steuerorgan für einen transportablen Druckluftbehälter zum Füllen von Kraftfahrzeugreifen — ein sogenanntes Reifenfüllgerät — mit je einem federbelasteten auf einer gemeinsamen Achse hintereinander angeordneten Tellerventil (10 bzw. 15) zum Zuführen von Druckluft aus dem Druckluftbehälter in den Reifen (Einlaßventil) und zum Ablassen von Luft aus dem Reifen ins Freie (Auslaßventil), einem Manometer zur Anzeige des Reifendruckes sowie einer zum Reifen führenden Anschlußleitung (5) wobei die beiden Ventile und Anschlußleitungen (8 und 5) zum Manometer und Reifen bei geschlossenen Ventilen an einen gemeinsamen Raum (Zentralraum) angrenzen und bei geöffnetem Einlaßventil (10) die Anschlußleitung (8) zum Manometer verschlossen ist, dadurch gekennzeichnet, daß das Auslaßventil (15) innerhalb eines lose mit dem Ventilteller (9) des Einlaßventils (10) verbundenen Ventil-Stößels (13) angeordnet und unabhängig von dessen Stellung von außerhalb dieses Ventil-Stößels (13) betätigbar ist.

2. Steuerorgan nach Anspruch 1, dadurch gekennzeichnet, daß der Ventil-Stößel (13) eine diesen auf der gesamten Länge durchdringende Bohrung (21) aufweist, an deren einem Ende das Auslaßventil (15) angeordnet ist und deren anderes Ende auf den Ventilteller (9) des Einlaßventils (10) weist, wobei zwischen Auslauföffnung der Bohrung (21) und Ventilteller (9) bei Normallage des Stößels (13), d.h. bei nicht betätigtem geschlossenem Einlaßventil (10), ein Freiraum vorhanden ist, während der Stößel (13) bei Betätigen des Ventiltellers (9) zum Öffnen des Einlaßventils (10) durch Auflage auf dem Ventilteller (9) die Auslauföffnung der Bohrung (21) dicht verschließt.

3. Steuerorgan nach Anspruch 1 oder 2, dadurch gekennzeichnet, daß das Manometer ausschließlich über die den Ventil-Stößel (13) durchdringende Bohrung (21) mit dem Zentralraum in der Bohrung (7) verbunden ist.

4. Steuerorgan nach einem der vorhergehenden Ansprüche, dadurch gekennzeichnet, daß der Stößel (13) für das Einlaßventil (10) in der Bohrung (7) gleitet und gegenüber der Wand dieser Bohrung (7) durch zwei mit Abstand hintereinanderliegende in axialer Richtung wirkende Dichtringe (17) gedichtet ist, wobei zwischen den Dichtringen (17) ein Ringraum (2) vorhanden ist, in den vom Steuergehäuse (1) aus die Anschlußleitung (8) für das Manómeter und vom Stößel (13) aus radiale Bohrungen (4), die wiederum mit der Bohrung (21) in Verbindung stehen, münden.

### Claims

1. A control element for a transportable compressed-air container for filling motor-vehicle tyres — a so-called tyre inflator—, which element comprises spring-loaded poppet valves (10 and 15), which are provided one behind the other on a common axis, for feeding compressed air from the compressed-air container into the tyre (inlet valve) and for blowing off air from the tyre into the open air (outlet valve), a pressure gauge for indicating the tyre pressure as well as a connecting line (5) passing to the tyre, the two valves and the connecting lines (8 and 5) to the pressure gauge and to the tyre being adjacent to a common chamber (central chamber) when the valves are shut and the connecting line (8) to the pressure gauge being sealed when the inlet valve (10) is opened, characterised in that the outlet valve (15) is provided within a valve tappet (13), which is loosely connected to the valve disc (9) of the inlet valve (10), and is actuatable from outside this valve tappet (13) irrespective of the position of the latter.

2. A control element as claimed in Claim 1, characterised in that the valve tappet (13) has a bore which passes therethrough over its entire length and at one end of which there is provided the outlet valve (15) and the other end of which points to the valve disc (9) of the inlet valve (10), there being provided a free space between the outlet port of the bore (21) and the valve disc (9) when the tappet (13) is in the normal position, i.e. with the inlet valve (10) not actuated and shut, whereas if the valve disc (9) is actuated for opening the inlet valve (10) the tappet (13) tightly seals the outlet port of the bore (21) by resting on the valve disc (9).

3. A control element as claimed in Claim 1 or 2, characterised in that the pressure gauge is connected to the central chamber in the bore (7) only through the bore (21) which penetrates the valve tappet (13).

4. A control element as claimed in one of the preceding Claims, characterised in that the tappet (13) for the inlet valve (10) slides in the bore (7) and is sealed relative to the wall of this bore (7) by two sealing rings (17) which lie one behind the other with a spacing and act in the axial direction, there being provided between the sealing rings (17) an annular space (2), into which there open out from the control housing (1) the connecting line (8) for the pressure gauge and from the tappet (13) radial bores (4) which, in turn, are in communication with the bore (21).

### Revendications

1. Organe de commande équipant un réservoir transportable d'air comprimé destiné à gonfler des pneumatiques de véhicules automobiles (appelé « appareil de gonflage »), comportant, disposées l'une derrière l'autre sur un axe commun, des soupapes (10 ; 15) montées élastiquement et destinées à introduire dans le pneumatique de l'air comprimé provenant dudit réservoir (soupape d'admission) et à évacuer cet air dudit pneumatique dans l'atmosphère (soupape d'échappement), un manomètre indiquant la pression dudit pneumatique, ainsi qu'un conduit (5) raccordé audit pneumatique, les deux soupapes et les deux conduits (8, 5) de raccordement au manomètre et au pneumatique étant contigus à une chambre commune (chambre centrale) lorsque lesdites soupapes sont fermées, auquel cas le conduit (8) de raccordement au manomètre est fermé lorsque ladite soupape d'admission (10) est ouverte, organe caractérisé par le fait que ladite soupape d'échappement (15) est disposée à l'intérieur d'un coulisseau (13) relié avec jeu à l'obturateur (9) de la soupape d'admission (10), cette soupape d'échappement pouvant être actionnée à partir d'un endroit extérieur audit coulisseau (13), indépendamment de la position de ce dernier.

2. Organe de commande selon la revendication 1, caractérisé par le fait que le coulisseau (13) est percé d'un alésage (21) qui le traverse sur toute sa longueur, à l'une des extrémités duquel se trouve la soupape d'échappement (15) et dont l'autre extrémité est orientée vers l'obturateur (9) de la soupape d'admission (10), un espace libre étant ménagé entre l'orifice de sortie de l'alésage (21) et ledit obturateur (9) en position normale dudit coulisseau (13), c'est-à-dire lorsque la soupape d'admission (10) fermée n'est pas actionnée, cependant que, lorsque l'obturateur (9) est actionné pour ouvrir ladite soupape d'admission (10), ledit coulisseau (13) obture hermétiquement l'orifice d'échappement dudit alésage (21) en étant appliqué contre ledit obturateur (9).

3. Organe de commande selon l'une des revendications 1 et 2, caractérisé par le fait que le manomètre n'est relié à la chambre centrale du passage (7) que par l'alésage (21) traversant le coulisseau (13).

4. Organe de commande selon l'une quelconque des revendications 1 à 3, caractérisé par le fait que le coulisseau (13) associé à la soupape d'admission (10) est mobile dans le passage (7) et est isolé hermétiquement, par rapport à la paroi de ce passage (7), par deux garnitures annulaires d'étanchéité (17) se succédant à distance l'une de l'autre et agissant dans le sens axial, ces garnitures d'étanchéité (17) délimitant entre elles une chambre annulaire (2) dans laquelle débouchent le conduit (8) de raccordement au manomètre, partant du carter (1), ainsi que des passages radiaux (4) qui, partant du coulisseau (13), communiquent à leur tour avec l'alésage (21).

0 008 747

1/1

Fig. 1

Fig. 2